# EUROPÄISCHE PATENTSCHRIFT

(11) **EP 1 093 707 B1**
(45) Veröffentlichungstag und Bekanntmachung des Hinweises auf die Patenterteilung: **29.11.2006**
(21) Anmeldenummer: 00122763.6
(22) Anmeldetag: 19.10.2000
(51) Int. Cl.: A01B 73/04, A01D 75/30, A01B 51/02

(54) **Selbstfahrendes landwirtschaftliches Fahrzeug**
Agricultural automobile vehicle
Véhicule automobile agricole

(30) Priorität: 23.10.1999 DE 19951080
(43) Veröffentlichungstag der Anmeldung: 25.04.2001
(73) Patentinhaber: DEERE & COMPANY, Moline, Illinois 61265-8098 (US)
(72) Erfinder: Franet, Roger, 57200 Sarreguemines (FR); Smith, Larry N., Ottumwa, IA 52501 (US)
(74) Vertreter: Magin, Ludwig Bernhard

(56) Entgegenhaltungen:
- EP-A- 0 808 556
- EP-A- 0 808 557
- US-A- 3 429 109
- US-A- 4 409 780
- US-A- 4 854 112
- US-A- 5 715 667

## Beschreibung

Die Erfindung betrifft ein selbstfahrendes landwirtschaftliches Fahrzeug mit einem Chassis, vorderen und rückwärtigen Rädern und mit wenigstens einer Arbeitseinheit, die mittels eines Arms seitlich am Chassis vertikal schwenkbar angebracht ist, um wenigstens eine Arbeits- und eine Transportstellung einnehmen zu können.

Die DE-U1-297 19 765 offenbart ein landwirtschaftliches Mähfahrzeug mit drei Mäh- und Aufbereitungseinheiten, von denen eine an der Vorderseite eines Chassis und zwei je seitlich an dem Chassis angebracht sind. Die seitlichen Mäh- und Aufbereitungseinheiten werden von vertikal schwenkbaren Armen getragen, die zwischen den Rädern einer vorderen und einer rückwärtigen Achse an dem Chassis schwenkbar angreifen. In einer Transportstellung werden die Mäh- und Aufbereitungseinheiten in den Freiraum zwischen den Rädern geschwenkt.

Der Stand der Technik nach der US-A-4 854 112 und der US-A-5 715 667 bezieht sich jeweils auf einen Rasentraktor mit einem vorderen mittigen und zwei seitlichen Mähwerken. Die seitlichen Mähwerke sind jeweils in dem Freiraum zwischen den vorderen und den rückwärtigen Rädern schwenkbar angelenkt und weisen einen rückwärtigen Auswurf auf. Diese Mähvorrichtungen für den Rasenbereich weisen jeweils Mäheinheiten mit einer Mähbreite von 0,5 bis zu 1,5 m auf, die das geschnittene Gras in wenige Zentimeter langen Stücken auf den Boden abgeben. Das Fahrzeugchassis ist nur bis ca. 1,8 m hoch und ist kaum durch zulässige Abmessungen für den Straßentransport eingeschränkt.

Das der Erfindung zugrunde liegende Problem wird darin gesehen, daß das Fahrzeug speziell ausgebildet werden muß, um die Mäh- und Aufbereitungseinheiten zwischen seinen Rädern aufnehmen zu können; ein dadurch verursachter großer Radstand führt zu großen Wendekreisen und daß diese Fahrzeuge in der Landwirtschaft mit Arbeitseinheiten, z. B. Mäheinheiten versehen werden, die selbst in einer Transportstellung, wie sie von Rasenmähern bekannt sind, noch die zulässige Fahrzeugbreite überschreiten.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann eine Arbeitseinheit auch bei einem kurzen Abstand zwischen den vorderen und rückwärtigen Rädern in dem Bereich zwischen ihnen angebracht werden. Das Fahrzeug wird dennoch mittig belastet und kann von kurzer Länge sein, was sich insbesondere auch beim Wenden positiv bemerkbar macht. Bei dem Fahrzeug kann es sich insbesondere um ein spezielles Fahrzeug, um einen vorhandenen Feldhäcksler oder um einen Ackerschlepper handeln. Als Arbeitseinheit kommt insbesondere ein Mähwerk, ein Knick- oder Schlagzetter oder ein Mähknick- bzw. Mähschlagzetter in Frage. Der Arm kann dauerhaft verformt sein, z. B. gebogen, er kann in sich beweglich sein, z. B. aus mehreren schwenkbar miteinander verbundenen Teilstücken bestehen oder derart gelagert sein, z. B. kardanisch, daß er die Arbeitseinheit in die jeweilige Stellung bringen kann. Die erforderliche Bewegung könnte auch mittels Lenkern erreicht werden.

Mittels eines Arms, der sich bis oberhalb des Chassis erstreckt, wird die Möglichkeit geschaffen, die Arbeitseinheit auf dessen Oberseite bzw. oberhalb von ihm abzulegen. Dadurch kann die Breite des Fahrzeugs während des Transports schmal gehalten werden. Fernerhin kann das Gewicht von dem Chassis anstatt von den Armen aufgenommen werden.

Die schwenkbare Anbringung des Arms an dem Chassis vor oder hinter dem Rad stellt eine Alternative dar zu einer Anbringung mittels eines als Kragarm ausgebildeten Arms, der um das Rad herum oder über dieses reicht. Bei der Anbringung vor oder hinter dem Rad kann der Arm meist auch gerade ausgebildet werden. Die Bewegungsfreiheit des Arms wird nicht durch das Rad eingeschränkt.

Eine Schwenkbarkeit der Arbeitseinheit mit Bezug auf den Arm kann z. B. gegenüber der Aufstandsfläche des Fahrzeugs um wenigstens eine Achse erfolgen. Eine Beweglichkeit gegenüber der Aufstandsfläche hat den Vorteil, daß die Arbeitseinheit Unebenheiten der Aufstandsfläche folgen bzw. ausweichen kann, wobei die Bewegungsfreiheit durchaus begrenzt oder mittels Dämpfer kontrolliert werden kann.

Unterschiedliche Arbeitseinheiten und unterschiedliche Erntegüter erfordern die Einhaltung bestimmter geometrischer Verhältnisse bei der Erntegutbergung oder -bearbeitung oder Bodenbearbeitung. So müssen z. B. bei einem Schneidwerk bestimmte Schnittwinkel und beim Aufnehmen von Erntegut auf dem Boden bestimmte Erfassungswinkel für Pick-up-Zinken oder dergleichen eingehalten werden. Dies wird dadurch ermöglicht, daß die Schwenkachse des Arms an dem Chassis unterschiedliche Stellungen einnimmt oder in unterschiedliche Stellungen gebracht, z. B. geschwenkt werden kann.

Eine Bewegungsmöglichkeit parallel oder jedenfalls im wesentlichen parallel zu der Aufstandsebene läßt es zu, den Winkel, unter dem die Arbeitseinheit z. B. mit einem Mähbalken auf das Erntegut auftrifft, zu ändern und an die jeweiligen Erntebedingungen anzupassen. Des weiteren ist es möglich, die Arbeitseinheit so zu schwenken, daß sie in der Transportstellung eine Lage gegenüber dem Fahrzeug einnehmen kann, in der sie besonders platzsparend, z. B. auf der Oberseite des Chassis, untergebracht werden kann.

Mittels einer Anlenkung des Arms oberhalb des Schwerpunkts der Arbeitseinheit und oberhalb der Achse des betreffenden Rades werden Drehmomente vermieden, was die Belastung reduziert und die Stabilität des gesamten Fahrzeugs erhöht.

Die Verwendung eines Antriebsstranges mit einer Teleskopwelle und Universalgelenken beläßt der Arbeitseinheit ein großes Maß an Bewegungsfreiheit einerseits und erlaubt eine schnelle Trennung des Antriebsstranges, falls dies erforderlich ist, andererseits. Bewegungsfreiheit ist insbesondere deshalb sehr gefragt, weil die Arbeitseinheit Bodenunebenheiten folgen und dem Fahrzeug gegenüber verschiedene Stellungen einnehmen können sollte.

Hydraulikmotoren eignen sich hervorragend für den Antrieb einer solchen Einheit, weil sie direkt an die anzutreibenden Teile angebracht werden können und mittels biegsamer Leitungen bzw. Schläuche in nahezu beliebigen Stellungen benutzt werden können. Eine solchermaßen angetriebene Arbeitseinheit kann bei angeschlossenem Antrieb seine Arbeits- und Transportstellung einnehmen.

Eine sehr hohe Verwendungsmöglichkeit des Fahrzeugs wird dadurch erreicht, daß mit der Arbeitseinheit nicht nur Erntegut gemäht sondern auch unmittelbar aufbereitet werden kann.

Mittels eines Schwadlegers ist es möglich, das am Ende der Arbeitseinheit abgegebene Erntegut anstatt unmittelbar dahinter auch seitlich versetzt dazu abzulegen, so daß eine Gruppierung mehrerer Schwade oder die Bildung von Fahrgassen vereinfacht wird.

Ein Arm, der sich außerhalb des Umrisses des Chassis erstreckt, also z. B. rückwärtig und oberhalb eines Rahmens, Motorverkleidung und dergleichen läßt eine Anlage der Arbeitseinheit an dem Chassis zu, wodurch sich die Gesamtbreite des Fahrzeugs gering halten läßt. Jedenfalls sind in dem Chassis und seiner Verkleidung keine Einbuchtungen zur Aufnahme des Arms erforderlich.

Wenn das Fahrzeug ein abgespeckter Feldhäcksler ist, werden zwei Vorteile erreicht. Zum einen kann ein Feldhäcksler für eine zweite Aufgabe und zu einem Zeitpunkt eingesetzt werden, zu dem er evtl. nicht benötigt wird. Zum anderen können auch ältere Feldhäcksler mit verschlissenen Häckselkomponenten aber mit ansonsten unbeschädigtem Antrieb und Chassis weiter verwendet werden. In beiden Fällen wird die Rentabilität eines Feldhäckslers erhöht. Gleiche Überlegungen gelten auch für andere Spezialmaschinen.

In der Zeichnung sind zwei nachfolgend näher beschriebene Ausführungsbeispiele der Erfindung dargestellt. Es zeigt:
- Fig. 1: ein Fahrzeug mit drei Arbeitseinheiten nach einem ersten Ausführungsbeispiel und in Draufsicht,
- Fig. 2: das Fahrzeug aus Figur 1 in Seitenansicht,
- Fig. 3: eine Aufhängung einer seitlichen Arbeitseinheit in vergrößerter Darstellung,
- Fig. 4: ein Fahrzeug mit einer vorderen und einer seitlichen Arbeitseinheit nach einem zweiten Ausführungsbeispiel, wobei sich die seitliche Arbeitseinheit in einer ersten Transportstellung befindet, und
- Fig. 5: das Fahrzeug nach Figur 4, wobei sich die seitliche Arbeitseinheit in einer zweiten Transportstellung befindet.

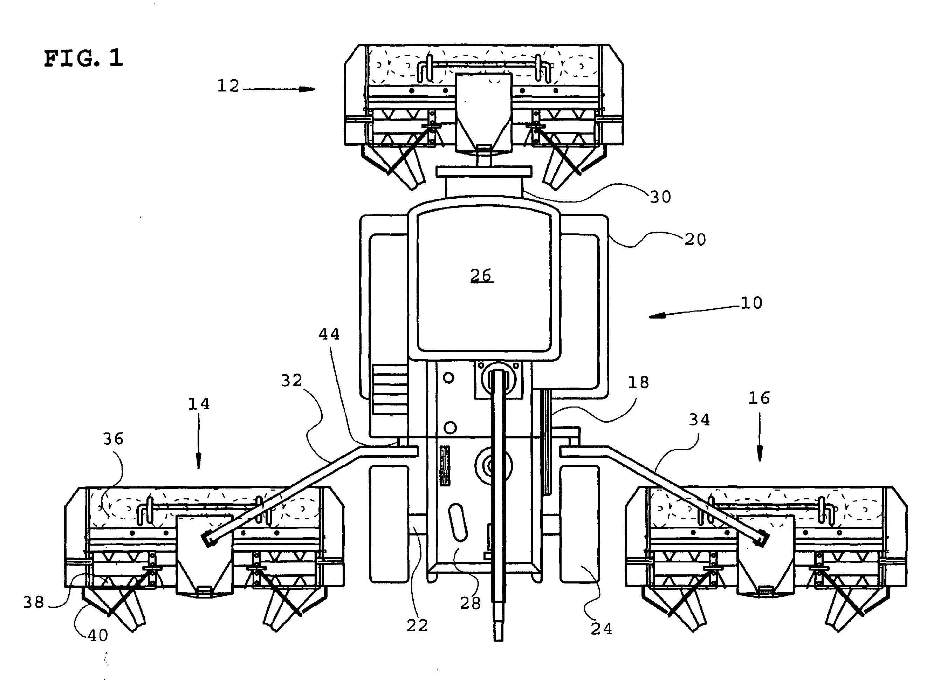

Figur 1 zeigt ein Fahrzeug 10 in Draufsicht mit einer vorderen, einer linken und einer rechten Arbeitseinheit 12, 14 und 16 nach einem ersten Ausführungsbeispiel.

Bei dem Fahrzeug 10 handelt es sich in diesem Ausführungsbeispiel um einen selbstfahrenden Feldhäcksler, wie er z. B. unter der Typenbezeichnung 6910 von JOHN DEERE vertrieben wird. Anstelle aktueller Feldhäcksler kommen aber auch gebrauchte Feldhäcksler in Frage, die für den Zweck dieser Erfindung noch voll tauglich sind. Anstatt eines solchen Feldhäckslers kommt aber auch ein sonstiges Trägerfahrzeug, z. B. eine selbstfahrende Schädlingsbekämpfungsspritze oder dergleichen in Frage.

Das Fahrzeug weist ein Chassis 18 auf, das sich in seinem vorderen Endbereich auf einer nicht gezeigten Achse mittels Rädern 20 und auf einer rückwärtigen Achse 22 und Rädern 24 auf dem Boden abstützt. Das Chassis 18 trägt eine Fahrerkabine 26 und einen nicht im Detail gezeigten Motor 28. Ferner ist an der Vorderseite des Chassis 18 eine Anhängevorrichtung 30 und zwischen den linken Rädern 20, 24 eine Tragvorrichtung 32 und zwischen den rechten Rädern 20, 24 eine Tragvorrichtung 34 vorgesehen.

Die Arbeitseinheiten 12, 14, 16 haben gemeinsam, daß sie mit einer Mäheinheit 36 und einer stromabwärts von dieser gelegenen Aufbereitungseinheit 38 bestückt sind. Am Abgabeende jeder Arbeitseinheit 12, 14, 16 ist eine Schwadformvorrichtung 40 vorgesehen. Die Arbeitseinheiten 12, 14, 16 haben die Aufgabe, auf dem Boden wachsendes Erntegut, z. B. Gras, Luzerne, etc. zu mähen und das Erntegut derart mechanisch aufzubereiten, d. h. auf es einzuwirken, daß die in ihm enthaltene Feuchtigkeit leichter entweichen kann, so daß es schneller trocknet. Während die vordere Arbeitseinheit 12 mindestens so breit ist wie der Abstand zwischen den Außenkanten der vorderen Räder 20, können die seitlichen Arbeitseinheiten 14, 16 breiter oder aber auch schmaler sein. Die Verwendung dreier nebeneinander verlaufender Arbeitseinheiten 12, 14, 16 führt zu einer Gesamtarbeitsbreite von ca. neun Metern. Hingegen kann die Breite des gesamten Fahrzeugs 10 unter der maximal zulässigen Breite für Straßenfahrten gehalten werden, wenn die seitlichen Arbeitseinheiten 14, 16 in eine Stellung geschwenkt werden, in der sie nicht über die Seitenkanten der vorderen Räder 20 hinausragen.

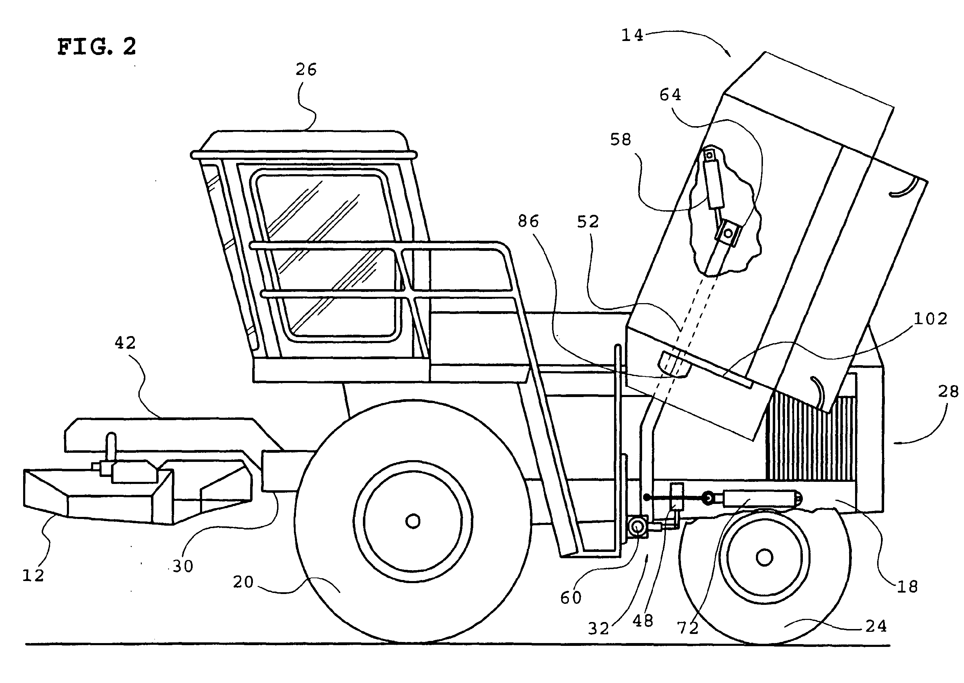

Es wird nunmehr Bezug genommen auf das in Figur 2 Gezeigte.

Figur 2 zeigt das Fahrzeug 10 nach Figur 1 in Seitenansicht, wobei sich die Arbeitseinheiten 12, 14, 16 in einer Transportstellung befinden - allerdings wird die Arbeitseinheit 16 von der Arbeitseinheit 14 verdeckt. Es ist zu erkennen, daß die vordere Arbeitseinheit 12 und die linke Arbeitseinheit 14 in eine Transportstellung angehoben bzw. nach oben geschwenkt wurden, wobei die linke Arbeitseinheit 14 nunmehr eine Lage oberhalb des linken rückwärtigen Rades 24 einnimmt.

Die vordere Arbeitseinheit 12 ist in der Art eines sogenannten Frontmähwerks mit einem Aufbereiter gehalten, das an seiner Rückseite eine Aufhängung 42 enthält, die an der Anhängevorrichtung 30 angebracht werden kann. Die Anhängevorrichtung 30 kann in der Höhe verstellt werden. An der Schnittstelle zwischen der Aufhängung 42 und der Anhängevorrichtung 30 sind Haken, Ösen, und dergl. vorgesehen, die ihrer formschlüssigen und lösbaren Verbindung dienen. Die Anhängevorrichtung 30 ist an sich bekannt und enthält nicht dargestellte Lenker und Stellmotoren zum vertikalen Verstellen der Arbeitseinheit 12.

Die seitlichen Arbeitseinheiten 14, 16 sind gleich aber spiegelbildlich zu der Längsmittenachse des Fahrzeugs 10 ausgebildet. Hinsichtlich der Mäheinheit 36, der Aufbereitungseinheit 38, der Schwadformvorrichtung 40 sowie der sie umgebenden nicht einzeln benannten Verkleidungsteile handelt es sich hierbei im wesentlichen um vorhandene Erntegutbearbeitungseinheiten, die für den Anbau an die Dreipunkthydraulik von Ackerschleppern ausgebildet sind und seitlich von dem Ackerschlepper wegragen. Soweit sie sich von bekannten Arbeitseinheiten für die Zwecke dieser Erfindung unterscheiden, und soweit es die Tragvorrichtung 32 betrifft, wird dies wie folgt beschrieben. Die nachfolgende Beschreibung bezieht sich lediglich auf die linke Arbeitseinheit 14, während die rechte analog zu ihr ausgebildet ist.

Zur Aufhängung der Arbeitseinheit 14 setzt sich die Tragvorrichtung 32 aus einem ersten Lager 44, einem Lagerarm 46, einem Stellmotor 48, einem zweiten Lager 50, einem Arm 52, einer Stellvorrichtung 54, einem dritten Lager 56 und einem Stellmotor 58 zusammen. Die Tragvorrichtung 32 ist so ausgebildet, daß sie als Bausatz an bereits existierende Arbeitseinheiten und Fahrzeuge, insbesondere Feldhäcksler, nachträglich angebaut werden kann.

Das Lager 44 enthält einen Lagerzapfen 60, der z. B. seitlich an das Chassis 18 angeflanscht werden kann und sich waagrecht quer zur Fahrtrichtung erstreckt. Auf dem Lagerzapfen 60 ist vertikal schwenkbar eine Hülse 62 gelagert und axial gesichert, die einen Anschluß 64 für den Lagerarm 46 aufweist, der sich in der Fahrtrichtung erstreckt. Der Lagerarm 46 wird einenends in dem Anschluß 64 und anderenends von dem Stellmotor 48 gehalten und ist im wesentlichen von der Form eines Rohrs oder einer runden Achse. Die Verbindung zwischen dem Anschluß 64 bzw. dem Stellmotor 48 und dem Lagerarm 46 ist mittels Sicherungselementen fest zusammengefügt.

Der Stellmotor 48 ist als ein einfachwirkender Hydraulikmotor ausgebildet und wird von einem nicht gezeigten fernsteuerbaren Hydrauliksystem beaufschlagt. Die Verbindung zwischen dem vertikal ausgerichteten Stellmotor 48 und dem Lagerarm 46 erfolgt in einem Gelenk 66. Es ist ersichtlich, daß der Stellmotor 48 den Lagerarm 46 um die Längsachse des Lagerzapfens 60 vertikal schwenken kann.

Das zweite Lager 50 ist ebenfalls als eine Hülse oder dergleichen innen hohl ausgebildet, wobei sich die Längsmittenachse des Hohlraums im wesentlichen in der Fahrtrichtung erstreckt. Das zweite Lager 50 ist in den Endbereich des Arm 52 integriert und auf dem Lagerarm 46 schwenkbar aufgenommen.

Zwischen dem Anschluß 64 und dem Gelenk 66 ist der Arm 52 mittels des zweiten Lagers 50 auf dem Lagerarm 46 vertikal schwenkbar aufgenommen. Der Arm 52 erstreckt sich von dem Lagerarm 46 bis zu der Mitte der Arbeitseinheit 14 und ist hierzu nach dem ersten Ausführungsbeispiel nach hinten abgewinkelt. Diese Form des Arms 52 kann mit einer Schweißkonstruktion einfach erreicht werden, wobei durch die Verwendung von Hohlprofilen die erforderliche Festigkeit erzielbar ist. An dem dem zweiten Lager 50 gegenüberliegenden Ende wird der Arm 52 in dem Lager 56 schwenkbar aufgenommen. Zwischen seinen Enden greift an den Arm 52 die Stellvorrichtung 54 an, um den Arm 52 aus einer unteren Stellung, der Arbeitsstellung, in eine obere Stellung, die Transportstellung zu verschwenken. Insbesondere mit Blick auf Figur 2 ist zu erkennen, daß das außenliegende, freikragende Ende des Arms 52 stets im wesentlichen in der gleichen vertikalen Ebene liegt wie die Drehachse der rückwärtigen Räder 24. Die Formgebung des Arms 52 ist so gewählt, daß sich die Arbeitseinheit 14 möglichst weit vorne befindet.

Die Stellvorrichtung 54 nach diesem Ausführungsbeispiel ist in besonderer Weise ausgeführt, um den Anbau an ein bereits bestehendes Fahrzeug 10 zu ermöglichen, ohne dessen Chassis 18 nennenswert ändern zu müssen. In einem Fall, in dem in diesem Bereich ausreichend Freiraum besteht, könnte auch ein einfacher Hydraulikzylinder verwendet werden, wie dies bei dem zweiten Ausführungsbeispiel der Fall ist. Die Stellvorrichtung 54 nach diesem Ausführungsbeispiel enthält ein Zugmittel 68, eine Führungsrolle 70 und einen dritten Stellmotor 72.

Das Zugmittel 68 ist als ein Stahlseil ausgebildet und einenends in einer Öse 74 an dem Arm 52 und anderenends in einer Öse 76 an dem dritten Stellmotor 72 gehalten. In nicht näher gezeigter Weise kann in dem Zugmittel 68 ein Spannschloß zum Einstellen der wirksamen Länge des Zugmittels 68 und/oder ein Dämpfungsglied, z. B. eine Feder, vorgesehen sein, das Schläge aufgrund von Bodenunebenheiten mildert. Anstelle eines Seils könnte das Zugmittel 68 auch als Kette ausgebildet sein.

Die Führungsrolle 70 ist an dem Chassis 18 angebracht und dient der Umleitung des Zugmittels 68 zwischen dem Arm 52 und dem dritten Stellmotor 72, so daß die in der Fahrtrichtung und horizontal verlaufende Bewegung des dritten Stellmotors 72 in eine quer zur Fahrtrichtung und vertikal gerichtete Bewegung umgeformt werden kann.

Der dritte Stellmotor 72 ist als ein einfachwirkender Hydraulikmotor ausgebildet und mit seinem zylinderseitigen Endbereich an dem Chassis 18 verankert. Die Betätigung des dritten Stellmotors 72 erfolgt ferngesteuert von der Fahrerkabine 26 aus auf nicht näher gezeigte Weise. Zum Spannen des Zugmittels 68 wird der dritte Stellmotor 72 eingefahren.

Das Lager 56 stellt die Verbindung zwischen dem Arm 52 und der Arbeitseinheit 14 her und ist an beiden schwenkbar angebracht. Das Lager 56 ist in dem dargestellten Ausführungsbeispiel als ein "U"-Profil mit einem Boden 78 und zwei Schenkeln 80 ausgebildet. Der Boden 78 wird von einem vertikalen Drehzapfen 82 durchdrungen, der in dem Gehäuse der Arbeitseinheit 14 gehalten ist und diesem eine horizontale Schwenkbewegung gegenüber dem Arm 52 gestattet. Die Schenkel 80 nehmen eine horizontal verlaufende Achse 84 auf, die den Endbereich des Arms 52 durchdringt. Das Lager 56 bildet zwischen dem Arm 52 und der Arbeitseinheit 14 somit ein kardanisches Gelenk. Es ist ersichtlich, daß die Arbeitseinheit 14 den Bodenunebenheiten folgen kann, indem sie um die Achse 84 vertikal schwenkt.

Der Stellmotor 58 ist ebenfalls als ein Hydraulikmotor ausgebildet, allerdings doppelwirkend. Einenends wird der Stellmotor 58 an dem Lager 56 gelenkig gehalten, anderenends an dem Gehäuse der Arbeitseinheit 14, nämlich an dessen Oberseite. Mittels des Stellmotors 58 kann die Arbeitseinheit 14 um den Drehzapfen 82 geschwenkt und in eine Stellung mit einem optimalen Winkel in bezug auf das noch zu mähende Feld gebracht werden. Die Betätigung des Stellmotors 58 erfolgt von der Fahrerkabine 26 aus.

Zum Betreiben der Arbeitseinheit 14 ist schließlich ein Antrieb 86 vorgesehen, der bei diesem Ausführungsbeispiel als ein Hydraulikmotor ausgebildet ist. Dieser Antrieb 86 wird über nicht gezeigte Leitungen mit Druckflüssigkeit versorgt, um die Mäheinheit 36 und - sofern vorhanden - die Aufbereitungseinheit 38 anzutreiben. Der Anschluß des Antriebs 86 an Leitungen auf dem Chassis 18 erfolgt vorzugsweise über Schnellkupplungen. Der Antrieb 86, also der Hydraulikmotor, wird an ein Getriebe 102 an der Arbeitseinheit 14 angeschlossen, das sowohl die Mäheinheit 36 als auch die Aufbereitungseinheit 38 antreibt. Es ist insbesondere mit Blick auf Figur 2 zu erkennen, daß die Arbeitseinheit 14 eine Transportstellung einnehmen kann, in der sie sich oberhalb des rückwärtigen Rades 24 befindet. Ferner ist zu erkennen, daß die Arbeitseinheit 14 in der Fahrtrichtungsebene nach hinten geneigt ist, so daß die Arbeitseinheit 14 oben nicht im vollen Maß über das Chassis 18 hinausragt. Wenn es auch nicht gezeigt ist, so können an dem Chassis 18 doch Stützen vorgesehen werden, auf denen die Arbeitseinheit 14 während des Transports ruht.

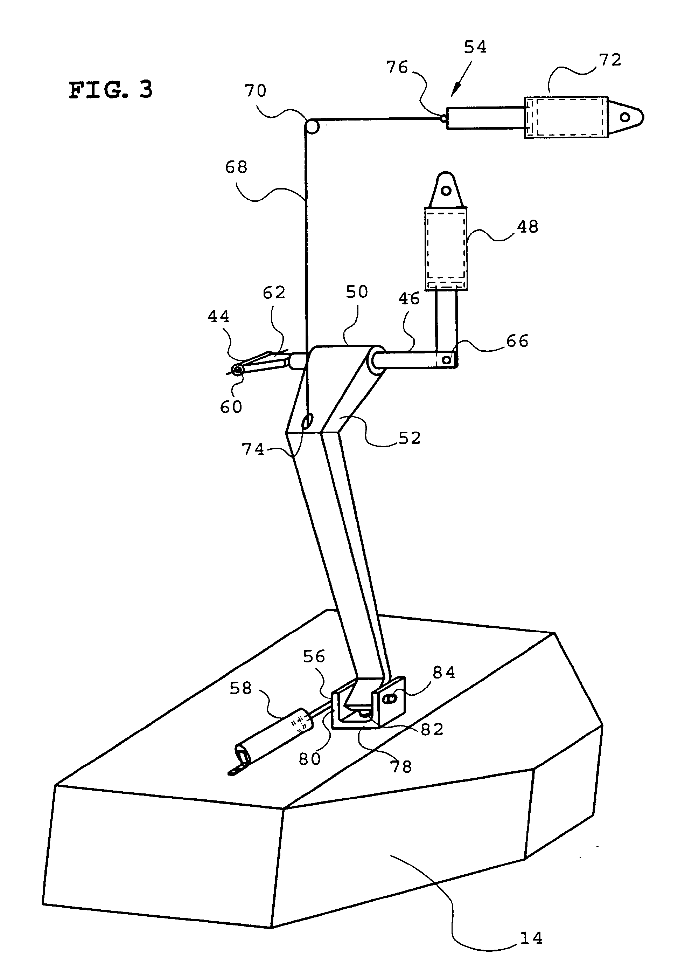

Um von einer Stellung gemäß den Figuren 1 und 3 in eine Stellung gemäß Figur 2 zu gelangen, wird folgendes unternommen. Der Stellmotor 58 wird derart betätigt, daß er die Arbeitseinheit 14 in die in Figur 2 gezeigte Lage mit Bezug auf den Arm 52 schwenkt. Anschließend wird der dritte Stellmotor 72 eingefahren, um an dem Zugmittel 68 zu ziehen und dabei den Arm 52 um den Lagerarm 46 vertikal zu schwenken, bis die Arbeitseinheit 14 eine senkrechte Lage über den rückwärtigen Rädern 24 eingenommen hat. In dieser Stellung wird die Arbeitseinheit 14 mit ihrer Oberseite an der Unterseite des Arms 52 anliegen und somit verhindern, daß sie während des Transports nach außen kippt. Der Arm 52 liegt an dem Chassis 18 an.

Eine Betätigung des Stellmotors 48 erfolgt regelmäßig nur, um den Arbeitswinkel, z. B. den Schnittwinkel, der Arbeitseinheit 14 in bezug auf den Boden zu ändern. Mittels dieses Stellmotors 48 kann die Arbeitseinheit 14 aber auch besser in ihre Stellung oberhalb des rückwärtigen Rades 24 gebracht werden. Je nach der Ausbildung der Tragvorrichtung 32, insbesondere des Lagers 44, des Lagerarms 46 und des Stellmotors 48 kann auch auf eine gebogene oder abgeknickte Ausführung des Arms 52 ganz oder teilweise verzichtet werden.

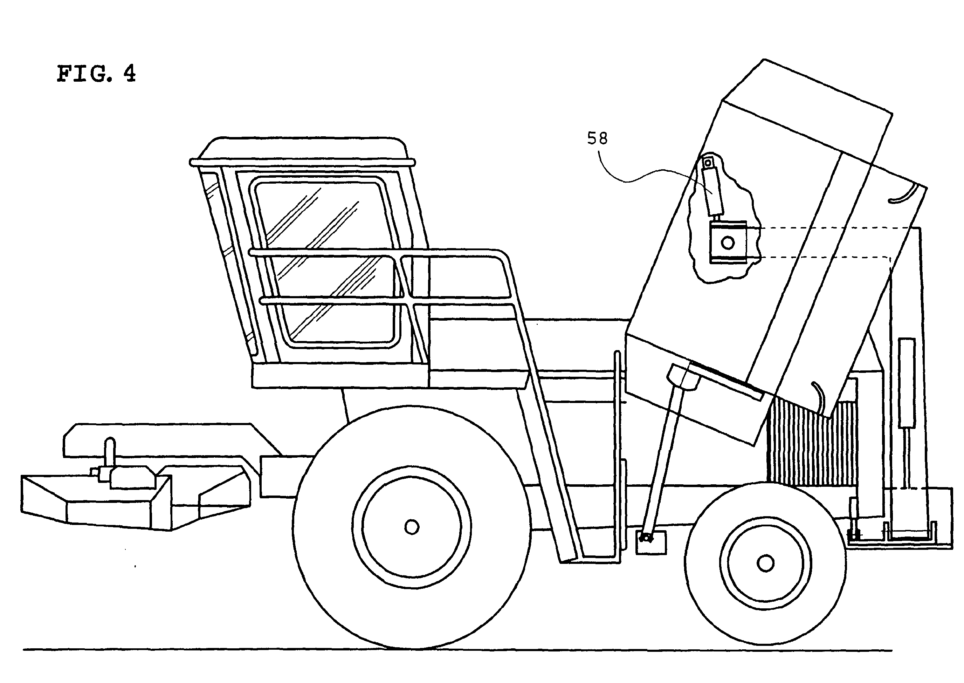

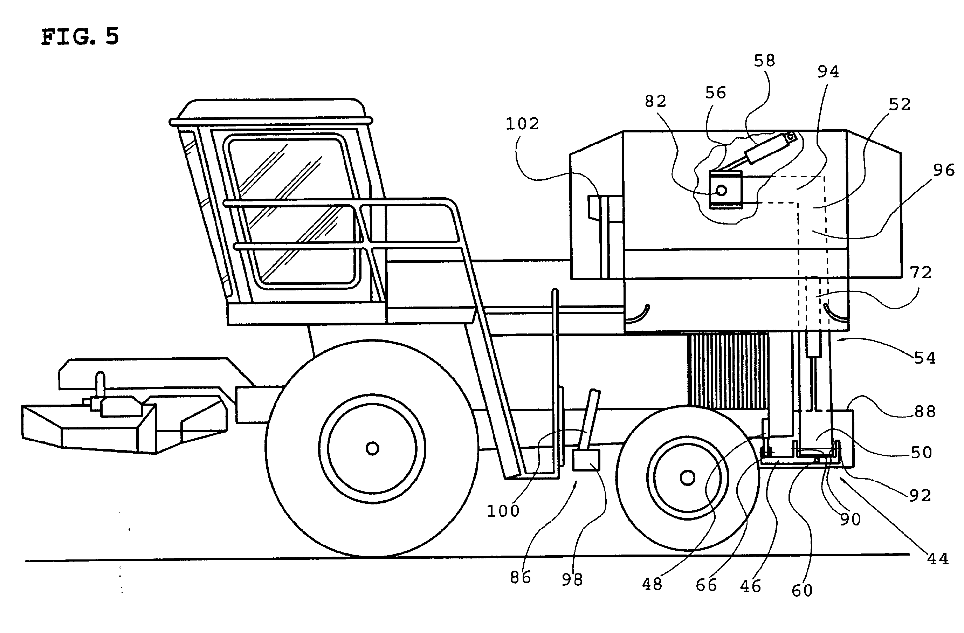

Im weiteren wird Bezug genommen auf das Ausführungsbeispiel nach den Figuren 4 und 5, wobei Teile gleicher Funktion in der Beschreibung und in der Zeichnung mit denselben Bezugszeichen versehen sind.
Das Ausführungsbeispiel nach den Figuren 4 und 5 unterscheidet sich von dem nach den Figuren 1 bis 3 im wesentlichen dadurch, daß der Arm 52 nicht zwischen den vorderen und rückwärtigen Rädern 20, 24 sondern am rückwärtigen Ende des Chassis 18 angebracht ist.

Das Lager 44 ist in diesem Ausführungsbeispiel in einem Anbau 88 an den rückwärtigen Bereich des Chassis 18 vorgesehen, könnte aber abhängig von den anzutreffenden geometrischen Gegebenheiten auch an dem Chassis 18 selbst vorgesehen sein.

Der Lagerarm 46 ist in der Art einer Gabel ausgeführt, die auf dem Lagerzapfen 60 vertikal schwenken kann und sich in der Fahrtrichtung erstreckt. Im wesentlichen symmetrisch zu dem Lagerzapfen 60 sind auf dem Lagerarm 46 zwei aufrechte Stege 90 vorgesehen, die eine Achse 92 horizontal aufnehmen. Das Gelenk 66 zur Verbindung des Lagerarms 46 mit dem Stellmotor 48 befindet sich an dem vorderen Endbereich des Lagerarms 46 mit einem relativ großen Abstand zu den Stegen 90.

Der Stellmotor 48 ist vertikal ausgerichtet und einenends an dem Chassis 18 und anderenends an dem Lagerarm 46 angeschlossen.

Das zweite Lager 50 ist ebenfalls wieder im fahrzeugseitigen Endbereich des Arms 52 in der Art einer Hülse verwirklicht, erstreckt sich im eingebauten Zustand zwischen den beiden Stegen 90 und wird von der Achse 92 durchdrungen.

Der Arm 52 ist in gleicher Weise an der Arbeitseinheit 14 schwenkbar angebracht und kann vertikal zwischen einer unten gelegenen Arbeitsstellung und wenigstens einer oben gelegenen Transportstellung geschwenkt werden. Aufgrund des Anschlusses des Arms 52 an dem Chassis 18 oder dem Anbau 88 mit wesentlich größerem Abstand zu der Drehachse der rückwärtigen Räder 24 im Vergleich zu dem Ausführungsbeispiel nach den Figuren 1 bis 3, ist der Arm 52 wesentlich stärker abgewinkelt und weist sogar einen Knick um 90 Grad auf, um im wesentlichen oberhalb der Mitte des rückwärtigen Rades 24 zu enden. Die Ausbildung und die Anordnung des Arms 52 ist so getroffen, daß er sich in der Transportstellung außerhalb des Chassis 18 befindet, d. h. mit einem längs, d. h. in der Fahrtrichtung verlaufenden Schenkel 94 oberhalb und mit einem quer, d. h. quer zur Fahrtrichtung verlaufenden Schenkel 96 rückwärtig des Chassis 18. Auf diese Weise kann die Arbeitseinheit 14 vollkommen an das Chassis 18 angelegt werden.

Die Stellvorrichtung 54 enthält nur den Stellmotor 72, der einenends direkt an dem Arm 52 und anderenends an dem Chassis 18 bzw. dem Anbau 88 verankert ist. Der Stellmotor 72 ist wiederum einfachwirkend ausgebildet und so angeordnet, daß er den Arm 52 nach oben schwenkt, während der Arm 52 alleine aufgrund der Gewichtskraft nach unten sinkt. Aufgrund des Freiraums hinter dem Chassis 18 kann sich der Stellmotor 72 frei und in der Bewegungsrichtung des Arms 52 bewegen, so daß es einer Umlenkung der Bewegungsrichtung durch z. B. ein Zugmittel 68 nicht bedarf.

Das Lager 56, der Stellmotor 58, der Drehzapfen 82 und die Achse 84 sind wie bei dem ersten Ausführungsbeispiel ausgebildet und besitzen die gleiche Funktion.

Der Antrieb 86 weist in diesem Ausführungsbeispiel ein Getriebe 98 und eine teleskopische Welle 100 auf.

Das Getriebe 98 ist an der Unterseite des Chassis 18 angebracht und wird mittels nicht gezeigter Riemen, Ketten, Wellen oder Hydraulikmotoren angetrieben.

Die teleskopische Welle 100 stellt die Verbindung zwischen dem Getriebe 98 und dem Getriebe 102 her und wird an diese jeweils mittels nicht dargestellter Universalgelenke angeschlossen. Die Verwendung von Universalgelenken läßt eine schnelle Trennung des Antriebs für den Transport oder bei vollkommen demontierter Arbeitseinheit 14 zu, während die teleskopische Ausbildung eine Relativbewegung zwischen der Arbeitseinheit 14 und dem Chassis 18 erlaubt. Die Universalgelenke sind sinnvollerweise als Weitwinkelgelenke ausgebildet, um eine hohe Gleichmäßigkeit in der Bewegung während des Betriebs auch bei großen Relativbewegungen zu erreichen.

Gemäß den Figuren 4 und 5 kann die Arbeitseinheit 14 zwei Transportstellungen einnehmen, die beide - wie auch die Arbeitsstellung analog Figur 1 - durch eine Betätigung des Stellmotors 58 erreichbar sind.

Die Transportstellung nach Figur 4 entspricht der nach Figur 2 für das erste Ausführungsbeispiel; lediglich der Arm 52 hat eine andere Lage und die Arbeitseinheit 14 liegt an dem Chassis 18 an, da sich der Arm 52 nicht dazwischen befindet. Die teleskopische Welle 100 bleibt angeschlossen, und die Arbeitseinheit 14 bleibt betriebsbereit. Diese Transportstellung eignet sich für kurze Transportfahrten oder wenn die Arbeitseinheit 14 zum Erreichen einer kleinen Mähbreite angehoben werden muß. Der Stellmotor 58 wird für diesen Zweck nur geringfügig ausgefahren.

Bei der Transportstellung nach Figur 5 nimmt die Arbeitseinheit 14 eine Lage ein, in der sich ihre Längsmittenachse im wesentlichen in der Fahrtrichtung erstreckt. Der Stellmotor 58 ist relativ weit ausgefahren, und die teleskopische Welle 100 ist getrennt oder demontiert. Je nach der Ausbildung der Unterseite der Mäheinheit 36 und/oder der Aufbereitungseinheit 38 stützt sich die Arbeitseinheit 14 auf dem Chassis 18 ab. Diese Transportstellung ist für längere Transportfahrten gedacht und hat darüber hinaus den Vorteil, daß die Arbeitseinheit 14 nicht über die Fahrerkabine 26 hinausragt, d. h., daß das Fahrzeug 10 eine geringere Gesamthöhe aufweist.

Wie bereits bei dem ersten Ausführungsbeispiel wird der Stellmotor 72 dazu benutzt, den Arm 52 vertikal zu schwenken, der Stellmotor 48 dient dazu, den Schnittwinkel der Mäheinheit 36 und/oder die Stellung der Arbeitseinheit 14 gegenüber dem Chassis 18 zu ändern, und der Stellmotor 58 verstellt die Arbeitseinheit 14 gegenüber dem Arm 52, um die richtige Transportstellung einzunehmen und/oder den Schnittwinkel gegenüber der Fahrtrichtung einzustellen.

Wenn auch die Hauptanwendung dieser Erfindung bei einer Mäheinheit 36 und evtl. kombiniert mit einer Aufbereitungseinheit 38 liegen wird, so ist die Anwendung bei anderen Maschinen möglich, und zwar insbesondere bei Heuwendern, Kreiseleggen, Aufbereitern alleine, Kultivatoren, Eggen, etc.

Während bei den gezeigten Ausführungsbeispielen die Arbeitseinheiten 14, 16 oberhalb des rückwärtigen Rades 24 eine Transportstellung einnehmen, könnte die Transportstellung auch oberhalb des vorderen Rades 20 vorgesehen werden; dies ist besonders dann machbar, wenn sich das kleinere Rad vorne befindet - was jedoch keine Voraussetzung ist.

Der Arm 52 könnte anstatt seiner gebogenen Ausführung auch als Doppelarm ausgebildet sein und beiderseits der Achse 22 an dem Chassis angreifen, wodurch die Biegemomente reduziert werden könnten.

## Patentansprüche

1. Selbstfahrendes landwirtschaftliches Fahrzeug (10) mit einem Chassis (18), vorderen und rückwärtigen Rädern (20, 24) und mit wenigstens einer Arbeitseinheit (14, 16), die mittels eines Arms (52) seitlich am Chassis (18) vertikal schwenkbar angebracht ist, um wenigstens eine Arbeits- und eine Transportstellung einnehmen zu können, wobei infolge einer Formgebung oder eines Aufbau s des Arms (52) oder einer Schwenklagerung des Arms (52) an dem Chassis (18) die Arbeitseinheit (14, 16) eine Transportstellung im wesentlichen oberhalb des vorderen oder rückwärtigen Rades (20, 24) einnimmt, wobei sich der Arm (52) bis oberhalb des Chassis (18) erstreckt und die Arbeitseinheit (14, 16) in ihrer Transportstellung an dem Chassis (18) abstützbar ist.

2. Selbstfahrendes Fahrzeug nach Anspruch 1, **dadurch gekennzeichnet, daß** der Arm (52) vor oder hinter dem betreffenden Rad (20) schwenkbar an das Chassis (18) angebracht ist.

3. Selbstfahrendes Fahrzeug nach einem oder mehreren der vorherigen Ansprüche, **dadurch gekennzeichnet, daß** die Arbeitseinheit (14, 16) schwenkbar an den Arm (52) angebracht ist.

4. Selbstfahrendes Fahrzeug nach einem oder mehreren der vorherigen Ansprüche, **dadurch gekennzeichnet, daß** die Schwenkachse des Arms (52) an dem Chassis (18) gegenüber der Aufstandsfläche geneigt oder neigbar ist.

5. Selbstfahrendes Fahrzeug nach einem oder mehreren der vorherigen Ansprüche, **dadurch gekennzeichnet, daß** der Arm (52) an dem Chassis (18) und/oder die Arbeitseinheit (14, 16) an dem Arm (52) gegenüber der Fahrtrichtung neigbar ist.

6. Selbstfahrendes Fahrzeug nach einem oder mehreren der vorherigen Ansprüche, **dadurch gekennzeichnet, daß** der Arm (52) an der Arbeitseinheit (14, 16) im wesentlichen oberhalb deren Schwerpunkt angebracht und so geformt, insbesondere gebogen ist, daß er in der Transportstellung im wesentlichen oberhalb der Achse (22) endet.

7. Selbstfahrendes Fahrzeug nach einem oder mehreren der vorherigen Ansprüche, **dadurch gekennzeichnet, daß** die Arbeitseinheit (14, 16) mittels einer teleskopischen Welle (100) und Universalgelenken antreibbar ist.

8. Selbstfahrendes Fahrzeug nach einem oder mehreren der vorherigen Ansprüche 1 bis 6, **dadurch gekennzeichnet, daß** die Arbeitseinheit (14, 16) mittels eines Hydraulikmotors angetrieben wird.

9. Selbstfahrendes Fahrzeug nach einem oder mehreren der vorherigen Ansprüche, **dadurch gekennzeichnet, daß** die Arbeitseinheit (14, 16) eine Mäheinheit (36) und eine Aufbereitungseinheit (38) enthält.

10. Selbstfahrendes Fahrzeug nach Anspruch 9, **dadurch gekennzeichnet, daß** die Arbeitseinheit (14, 16) mit einer Schwadformvorrichtung (40) versehen ist.

11. Selbstfahrendes Fahrzeug nach einem oder mehreren der vorherigen Ansprüche, **dadurch gekennzeichnet, daß** sich der Arm (52) außerhalb des Umrisses des Chassis (18) erstreckt.

12. Selbstfahrendes Fahrzeug nach einem oder mehreren der vorherigen Ansprüche, **dadurch gekennzeichnet, daß** es sich bei dem Fahrzeug (10) um einen selbstfahrenden Feldhäcksler handelt, an dessen Vorderseite anstatt eines Maisvorsatzes und eines Häckselaggregates eine Arbeitseinheit (12) und an dessen wenigstens einer Seite eine weitere Arbeitseinheit (14, 16) vorgesehen ist.

## Claims

1. Self-propelled agricultural vehicle (10) with a chassis (18), front and rear wheels (20, 24) and with at least one working unit (14, 16), which is attached to a side of the chassis (18) by means of an arm (52) to pivot vertically to be able to assume at least one working and one transport position, wherein as a result of a shape or structure of the arm (52) or a pivot mounting of the arm (52) on the chassis (18), the working unit (14, 16) assumes a transport position essentially above the front or rear wheel (20, 24), wherein the arm (52) extends to above the chassis (18) and the working unit (14, 16) can be supported on the chassis (18) in its transport position.

2. Self-propelled vehicle according to Claim 1, **characterised in that** the arm (52) is attached in front of or behind the respective wheel (20) to pivot on the chassis (18).

3. Self-propelled vehicle according to one or more of the preceding claims, **characterised in that** the working unit (14, 16) is attached to pivot on the arm (52).

4. Self-propelled vehicle according to one or more of the preceding claims, **characterised in that** the pivot axis of the arm (52) is or can be inclined on the chassis (18) relative to the contact area.

5. Self-propelled vehicle according to one or more of the preceding claims, **characterised in that** the arm (52) can be inclined on the chassis (18) and/or the drive unit (14, 16) can be inclined on the arm (52) relative to the direction of travel.

6. Self-propelled vehicle according to one or more of the preceding claims, **characterised in that** the arm (52) is attached to the working unit (14, 16) essentially above its centre of gravity and is shaped, in particular curved, in such a manner that it terminates essentially above the axle (22) in the transport position.

7. Self-propelled vehicle according to one or more of the preceding claims, **characterised in that** the working unit (14, 16) can be driven by means of a telescopic shaft (100) and universal joints.

8. Self-propelled vehicle according to one or more of the preceding Claims 1 to 6, **characterised in that** the working unit (14, 16) is driven by means of a hydraulic motor.

9. Self-propelled vehicle according to one or more of the preceding claims, **characterised in that** the working unit (14, 16) contains a mowing unit (36) and a conditioning unit (38).

10. Self-propelled vehicle according to Claim 9, **characterised in that** the working unit (14, 16) is provided with a swath-forming device (40).

11. Self-propelled vehicle according to one or more of the preceding claims, **characterised in that** the arm (52) extends outside the contour of the chassis (18).

12. Self-propelled vehicle according to one or more of the preceding claims, **characterised in that** the vehicle (10) is a self-propelled forage chopper, on the front side of which, in place of a corn attachment and a chopping assembly, a working unit (12) is provided and a further working unit (14, 16) is provided on its at least one side.

## Revendications

1. Véhicule agricole automoteur (10) comportant un châssis (18), des roues avant et arrière (20, 24) et au moins une unité de travail (14, 16), qui est montée sur le côté du châssis (18) au moyen d'un bras (52) de manière à pouvoir pivoter verticalement pour pouvoir être amenée dans au moins une position de travail et une position de transport, dans lequel véhicule automoteur, compte tenu d'une configuration ou d'une structure du bras (52) ou d'un palier de pivotement du bras (52) sur le châssis (18), l'unité de travail (14, 16) peut être amenée dans une position de transport sensiblement au-dessus de la roue avant ou arrière (20, 24), le bras (52) s'étendant jusqu'au-dessus du châssis (18) et l'unité de travail (14, 16), dans sa position de transport, pouvant prendre appui sur le châssis (18).

2. Véhicule automoteur selon la revendication 1, **caractérisé en ce que** le bras (52) est monté pivotant sur le châssis (18) devant ou derrière la roue (20) concernée.

3. Véhicule automoteur selon une ou plusieurs des revendications précédentes, **caractérisé en ce que** l'unité de travail (14, 16) est montée pivotante sur le bras (52).

4. Véhicule automoteur selon une ou plusieurs des revendications précédentes, **caractérisé en ce que** l'axe de pivotement du bras (52) sur le châssis (18) est incliné ou peut être incliné par rapport à la surface de pose.

5. Véhicule automoteur selon une ou plusieurs des revendications précédentes, **caractérisé en ce que** le bras (52) sur le châssis (18) et/ou l'unité de travail (14, 16) sur le bras (52) peuvent être inclinés par rapport à la direction de déplacement.

6. Véhicule automoteur selon une ou plusieurs des revendications précédentes, **caractérisé en ce que** le bras (52) sur l'unité de travail (14, 16) est monté sensiblement au-dessus du centre de gravité de celle-ci et est formé, en particulier courbé, de telle sorte que, dans la position de transport, il se termine sensiblement au-dessus de l'essieu (22).

7. Véhicule automoteur selon une ou plusieurs des revendications précédentes, **caractérisé en ce que** l'unité de travail (14, 16) peut être actionnée au moyen d'un arbre télescopique (100) et de joints universels.

8. Véhicule automoteur selon une ou plusieurs des revendications 1 à 6, **caractérisé en ce que** l'unité de travail (14, 16) est actionnée au moyen d'un moteur hydraulique.

9. Véhicule automoteur selon une ou plusieurs des revendications précédentes, **caractérisé en ce que** l'unité de travail (14, 16) comporte une unité de coupe (36) et une unité de traitement (38).

10. Véhicule automoteur selon la revendication 9, **caractérisé en ce que** l'unité de travail (14, 16) est munie d'un dispositif de formation d'andains (40).

11. Véhicule automoteur selon une ou plusieurs des revendications précédentes, **caractérisé en ce que** le bras (52) s'étend à l'extérieur du contour du châssis (18).

12. Véhicule automoteur selon une ou plusieurs des revendications précédentes, **caractérisé en ce que** le véhicule (10) est une ensileuse automotrice, sur le côté avant de laquelle est prévue une unité de travail (12) en lieu et place d'un cueilleur de maïs et d'un dispositif de hachage, et sur au moins un côté de laquelle est prévue une unité de travail (14, 16) supplémentaire.
